# DEMANDE DE BREVET EUROPEEN

(11) **EP 4 216 383 A1**
(43) Date de publication de la demande: **26.07.2023**
(21) Numéro de dépôt: 23150530.6
(22) Date de dépôt: 06.01.2023
(51) Int. Cl.: H02G 1/02, B64C 39/00, B64C 39/02, A01M 29/08, B64U 101/00

(54) **DISPOSITIF ET PROCÉDÉ DE POSE D'UNE BALISE SUR UN CÂBLE AÉRIEN PAR UNE INTERFACE MÉCANIQUE**

(30) Priorité: 25.01.2022 FR 2200635
(71) Demandeur: Skydrome Innovations, 93100 Montreuil (FR)
(72) Inventeur: CORROENNE, Tony, 93100 Montreuil (FR); VIDALING, Antoine, 93100 Montreuil (FR); VENAYRE, Charles, 93100 Montreuil (FR); CRAPON, Julien, 93100 Montreuil (FR); BONNET, Thimothée, 93100 Montreuil (FR)
(74) Mandataire: IP Trust

(57) **Abrégé**

Interface de pose (100) d'une pince (60) sur un câble arien (C) au moyen d'un drone (10), comprenant un châssis (102) présentant une zone de réception (E) du câble, sur lequel est fixé un sous-ensemble de liaison mécanique avec le drone, et un sous-ensemble de support et d'actionnement de la pince depuis une position ouverte vers une configuration fermée, ledit sous-ensemble de support et d'actionnement comportant : deux tiges mobiles (114d, 114g) déplaçables entre une position initiale dans laquelle la pince est maintenue dans une position ouverte, par arc-boutement avec chacune des tiges au niveau d'un point d'appui de levier, disposé du côté d'une extrémité proximale (114ds, 114gs), et une position finale dans laquelle la pince est dans une position fermée ; deux éléments de guidage (112d, 112g) fixés sur le châssis 102, pour guider respectivement les deux tiges mobiles selon une liaison cylindre plan bilatérale ; deux pièces de commande (116d, 116g), chacune des pièces de commande étant montée à rotation sur le châssis et étant agencée pour recevoir respectivement une extrémité distale (114di, 114ds) de la tige mobile (114d, 114g) ; un câble de commande (118) reliant les deux pièces de commande et coupant l'espace de réception (E) du câble aérien, définissant ainsi une partie extérieure et une partie intérieure tournée vers les pièces de commande, le sous-ensemble de support et d'actionnement étant agencé de sorte que lorsque le câble de commande est déplacé vers la partie intérieure de l'espace de réception, la force de déplacement est transmise par le câble aux pièces de commande (116d, 116g) qui sont entraînées en rotation et appliquent simultanément un moment de rotation sur les tiges mobiles au niveau de leur extrémité distale, chacune des tiges mobiles agissant comme un levier pour transmettre l'effort reçu sur la pince, au niveau de leur extrémité distale.

## Description

### Domaine technique

Le domaine de l'invention est celui de la pose de balise sur un câble aérien. En particulier, le domaine de l'invention est celui de la protection des oiseaux vis-à-vis des risques présentés par des câbles aériens, notamment des câbles de réseaux de distribution électriques.

L'invention s'applique notamment, mais non exclusivement à la protection avifaune vis-à-vis de lignes électriques HTA 20 000 volts sous tension.

### État de la technique antérieure

On a déjà présenté de nombreuses propositions pour la protection des oiseaux vis-à-vis des risques occasionnés par des câbles aériens.

Il a notamment été proposé des balises de protection avifaune comprenant des plaques ou bandes par exemple colorées, réfléchissantes, ou lumineuses liées à une pince adaptée pour être fixée sur les câbles aériens afin de mieux matérialiser la présence des câbles par les oiseaux.

Un exemple d'une telle balise est commercialisé notamment sous la dénomination FIREFLY^{®}.

Le problème posé par de telles balises est souvent celui de la fixation des pinces sur les câbles aériens.

Le document brevet FR3100091 propose d'installer les balises du type précité équipées d'une pince, à l'aide de drones. Plus précisément, le document précité propose un dispositif de pose d'une balise avifaune sur un câble aérien comprenant : un drone adapté pour transporter au moins une balise et qui porte un détecteur de présence de câble et au moins un actionneur adapté pour actionner un système de fixation de la balise sur le câble lorsqu'un tel câble est détecté par le détecteur de présence. Le détecteur de présence peut être un capteur de proximité de type inductif. Il peut encore s'agir d'un capteur mécanique. Le détecteur de présence pilote l'actionneur. L'actionneur est de préférence un servomoteur.

La présente invention a pour but d'améliorer l'état de la technique.

La présente invention a notamment pour but de simplifier le dispositif décrit dans l'art antérieur, notamment en ce qu'il ne comporte pas d'actionneur piloté par un détecteur de présence.

D'autres buts auxiliaires de l'invention sont de réduire le coût de pose et de garantir la sécurité du personnel intervenant.

Encore un autre but de l'invention est de proposer, plus généralement, un dispositif de pose de balise sur un câble aérien, par exemple en vue d'arrêter un processus de détoronnage du câble aérien.

### Exposé de l'invention

Un but de l'invention est notamment de remédier à tout ou partie des inconvénients précités.

Selon un premier aspect de l'invention, il est proposé un une interface de pose d'une pince sur un câble arien au moyen d'un drone, l'interface de pose comprenant un châssis présentant une zone de réception du câble aérien, sur lequel est fixé :
- un sous-ensemble de liaison mécanique avec le drone, et
- un sous-ensemble de support et d'actionnement de la pince depuis une position ouverte vers une configuration fermée, ledit sous-ensemble de support et d'actionnement comportant :
   i. deux tiges mobiles déplaçables entre une position initiale dans laquelle la pince est maintenue dans une position ouverte, par arc-boutement avec chacune des tiges au niveau d'un point d'appui de levier, disposé du côté d'une extrémité dite proximale, et une position finale dans laquelle la pince est dans une position fermée,
   ii. deux éléments de guidage fixés sur le châssis, pour guider respectivement les deux tiges mobiles selon une liaison cylindre plan bilatérale,
   iii. deux pièces de commande, chacune des pièces de commande étant montée à rotation sur le châssis et étant agencée pour recevoir respectivement une extrémité distale de la tige mobile,
   iv. un câble de commande reliant les deux pièces de commande et coupant l'espace de réception du câble aérien, définissant ainsi une partie extérieure et une partie intérieure tournée vers les pièces de commande,
   ledit sous-ensemble de support et d'actionnement étant agencé de sorte que lorsque le câble de commande est déplacé vers la partie intérieure de l'espace de réception, la force de déplacement est transmise par le câble aux pièces de commande qui sont entraînées en rotation et appliquent simultanément un moment de rotation sur les tiges mobiles au niveau de leur extrémité distale, chacune des tiges mobiles agissant comme un levier pour transmettre l'effort reçu sur la pince, au niveau de leur extrémité distale.

Selon un exemple de réalisation, le bras de levier est un bras de levier de deuxième classe.

De préférence, le câble de commande est précontraint.

Avantageusement, l'interface peut comprendre un sous-ensemble tendeur agencé pour régler la tension du câble de commande.

Selon une possibilité, chacune des tiges peut présenter un épaulement pour recevoir la pince en appui dans une position ouverte.

Selon un exemple de réalisation, chacune des tiges peut s'étendre selon un axe principal et présenter une extrémité formée d'un carré présentant un axe central, l'axe principal étant parallèle et distinct de l'axe central.

De préférence, l'interface peut en outre comprendre un sous-ensemble de guidage du câble aérien fixé sur le châssis, comprenant deux tiges de guidage disposées de part et d'autre de l'espace et adaptées pour assurer le centrage de la pince.

Plus particulièrement, les moyens de guidage peuvent comprendre au moins un guide en V.

De préférence, la distance entre les tiges de guidage peut être réglable. L'entraxe peut être réglable par « actionnement » pour faciliter la pose de câble de différents diamètres.

Le sous-ensemble de liaison mécanique avec le drone peut être réglable angulairement.

L'interface peut comporter un sous-ensemble panier prévu pour recevoir une plaque fixée à la pince. On peut ainsi éviter qu'elle se déplace la mettre dans une bonne position pour que l'ensemble pince étiquette puisse s'écarter de l'interface sans difficulté.

Selon un deuxième aspect de l'invention, il est proposé un système comportant : un drone adapté pour transporter au moins une balise, et qui porte une interface de pose d'une balise sur un câble aérien selon le premier aspect de l'invention, ou l'un ou plusieurs de ses perfectionnements.

### Description des figures

D'autres avantages et particularités de l'invention apparaîtront à la lecture de la description détaillée de mises en oeuvre et de modes de réalisation nullement limitatifs, au regard de dessins annexés sur lesquels :
- [Fig. 1] est une vue en perspective d'un système 1 conforme à l'invention, comportant une interface de pose 100 prévue pour porter une balise 50 dotée d'une pince, la pince étant dans une configuration ouverte,
- [Fig. 2] est une vue similaire à [Fig. 1], la pince étant en configuration fermée,
- [Fig. 3] est une vue en perspective de la balise 50 représentée sur [Fig. 1],
- [Fig. 4] est une vue en perspective plus détaillée de l'interface de pose 100 représentée sur [Fig. 1], la balise 50 étant retirée,
- [Fig. 5] est une vue avec arraché en perspective plus détaillée de la vue représentée sur

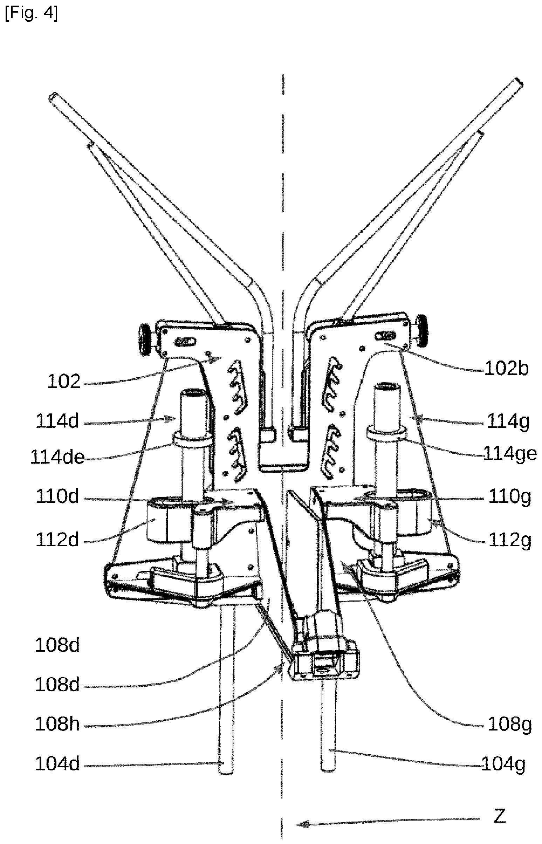

- [Fig. 4], la balise 50 étant placée,

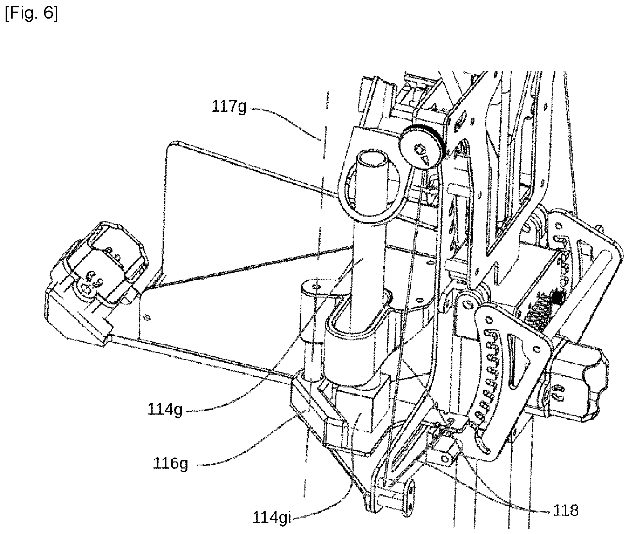

- [Fig. 6] est une vue latérale de l'interface de pose représentée sur
- [Fig. 5],

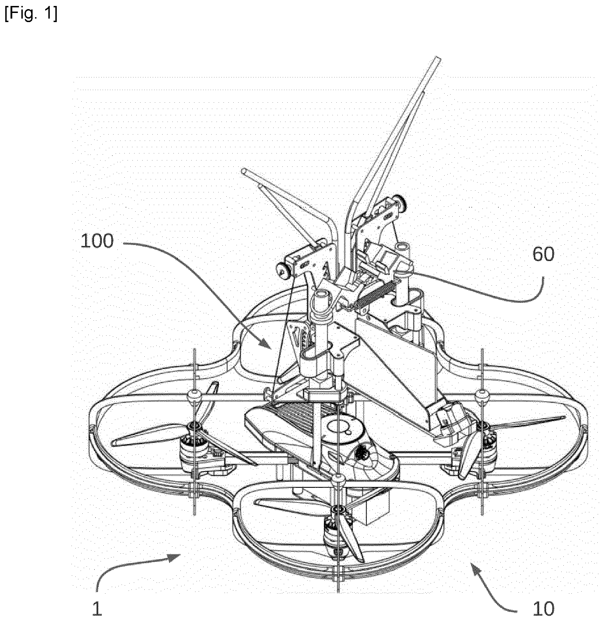

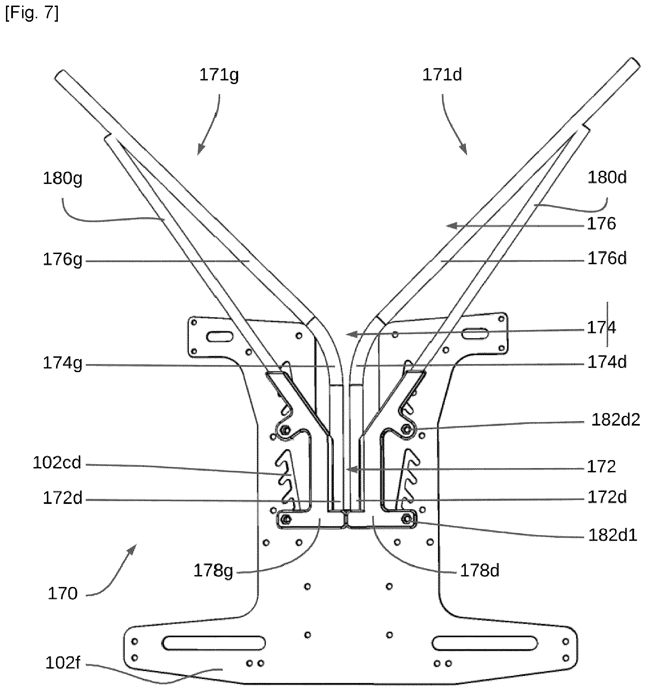

- [Fig. 7] est une vue de face d'une platine arrière de l'interface de pose 100 représentée sur [Fig. 1],

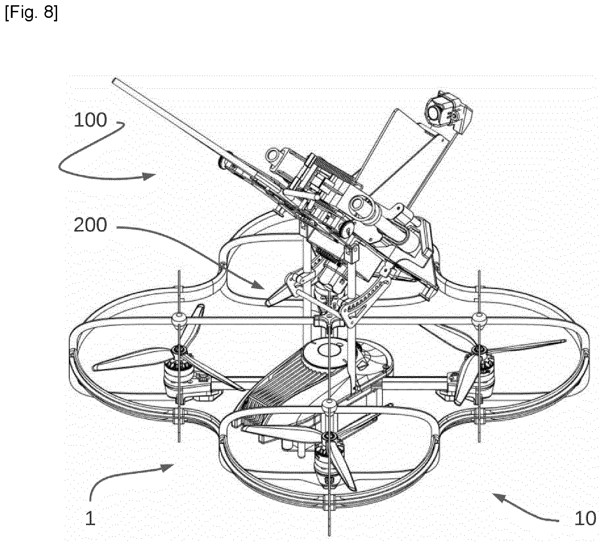

- [Fig. 8] est une vue de face d'une platine arrière de l'interface de pose 100 représentée sur [Fig. 1],

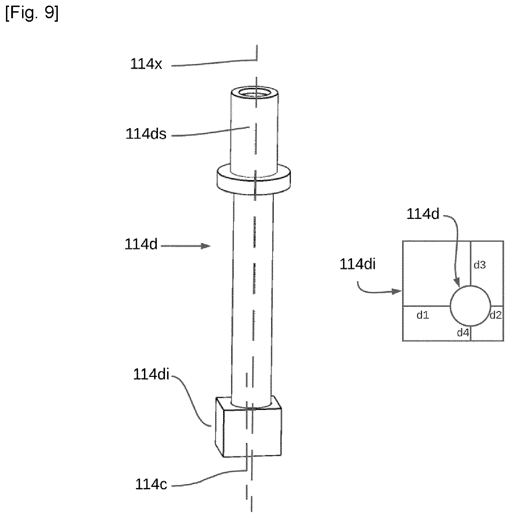

- [Fig. 9] est une vue de détail d'une tige mobile de l'interface de pose représentée sur [Fig. 4].

### Description de mode de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures, un élément apparaissant sur plusieurs figures conserve la même référence.

En référence à [Fig. 1], il est maintenant décrit un système 1 conforme à l'invention comporte principalement trois éléments : un drone 10, une balise, par exemple une balise avifaune 50 et une interface de pose 100.

### Drone 10

On entend dans le cadre de la présente invention par « drone » 10 tout aéronef sans pilote embarqué, autonome, susceptible d'être piloté à distance, par exemple du type trirotor ou quadrirotor.

Bien entendu un tel drone 10 est pourvu de préférence de tous les équipements classiques d'un drone piloté à distance, notamment gyroscope et caméra.

Dans le cadre de l'invention, le drone 10 utilisé doit être un drone permettant un vol stationnaire.

Le support 100 est fixé sur le drone 10 au moyen de deux tiges 104d, 104 g.

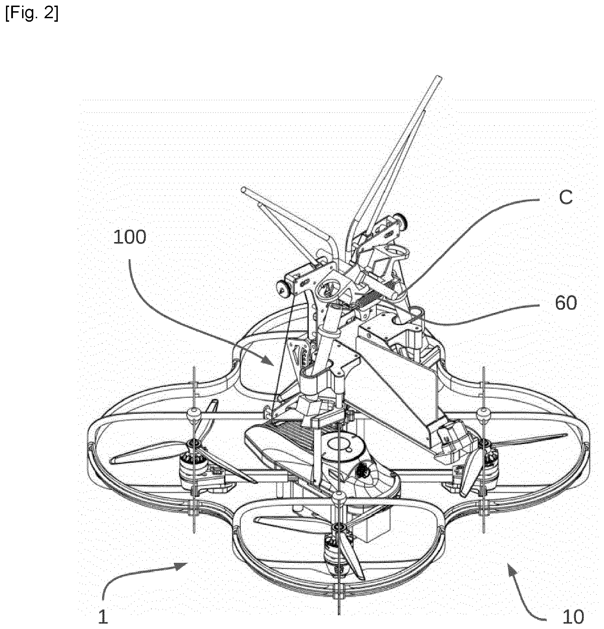

Le drone 10 doit être adapté pour ne pas risquer de perturbations sous l'effet du champ électromagnétique environnant, notamment le champ électromagnétique induit par un câble aérien C (représenté sur Fig. 2) à protéger et qui est approché par le drone 10.

À cette fin, le drone 10 peut être muni de tout blindage approprié à l'égard du champ électromagnétique environnant.

Il doit par ailleurs être pourvu de tout moyen d'isolation électrique permettant d'opérer sans difficulté en contact avec un câble aérien sous tension.

La structure générale des drones est connue en soi de l'homme de l'art. Elle ne sera donc pas décrite plus en détail par la suite.

### Balise 50

La balise 50 peut faire l'objet de nombreux mode de réalisation.

Il s'agit de préférence d'une balise avifaune 50 munie d'une pince 60 comprenant deux mâchoires 62 et 64, montées à rotation selon deux axes parallèles sur une partie d'embase 66, et sollicitées vers une position de fermeture par deux ressorts 90.

La balise 50 est prévue pour suspendre une plaque 70 à un objet allongé, tel que par exemple un câble, un fil ou un tuyau. La plaque 70 permet aux oiseaux de visualiser la présence du câble C. La plaque 70 peut être formée d'une bande colorée, réfléchissante, lumineuse, luminescente, ou toute autre variante appropriée. La balise 50 peut ne pas comporter de plaque 70. C'est par exemple le cas lorsque la balise 50 est uniquement constituée d'une pince, pour limiter ou arrêter un processus de détoronnage dudit câble.

La plaque 70 peut par exemple être fixée à un support 66' du dispositif de suspension, lequel support 66' est relié à une partie de base 66. Dans l'exemple illustré, le support 66' est relié de manière rigide à la partie de base 66 et ils sont avantageusement formés en une seule pièce.

La pince de fixation 60 de la balise 50 peut faire l'objet de nombreux modes de réalisation.

### Pince 60 de fixation de la balise

Les deux mâchoires engrènent par l'intermédiaire de pignons respectifs 62p, 64p en prise. Ainsi, les deux mâchoires 62, 64 sont montées à rotation symétrique par rapport à un plan vertical central de la balise.

Au repos, en position ouverte, les deux mâchoires 62, 64 forment un dièdre en V ouvert vers le haut, pour recevoir un câble C.

Chacune des mâchoires 62, 64 comporte deux crochets 62c, 64c, de préhension disposés de manière globalement transversale à la direction d'élongation des mâchoires 62, 64. Ces crochets en forme d'anneau 62c, 64c peuvent être utilisées pour appliquer un couple sur les mâchoires 62, 64 afin de les déplacer en position de fermeture.

La pince 60 comprend par ailleurs le ressort 90, de préférence deux ressorts 90 disposés symétriquement de part et d'autre de la pince 60 et qui tendent à solliciter les mâchoires 62, 64 en position de fermeture. Les deux ressorts 90 étant parallèles entre eux.

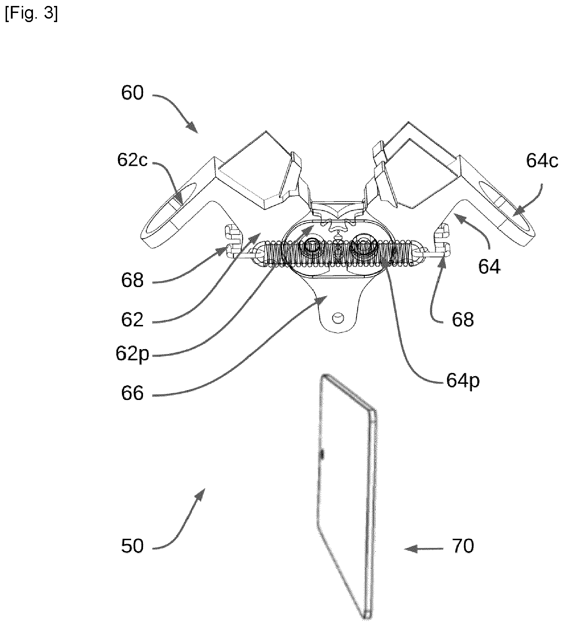

Lorsque le plan de sollicitation par les ressorts 90 est situé en dessous du plan des axes de rotation des mâchoires, les mâchoires 62, 64 sont maintenues en position ouverte, comme illustré sur [Fig.3].

Lorsque le plan de sollicitation par les ressorts 90 est situé au niveau du plan des axes de rotation des mâchoires 62, 64, les mâchoires 62, 64 sont en position instable, prêtes à basculer en position de fermeture.

Lorsque le plan de sollicitation par les ressorts 90 est situé en dessus du plan des axes de rotation des mâchoires 62, 64, les mâchoires sont sollicitées en position de fermeture.

### Structure générale de l'interface 100

### En référence à

[Fig. 4], l'interface de pose comporte une platine 102, dite platine arrière qui présente un axe médian Z, une face avant 102f (**Error! Reference source not found.**) et une face arrière 102 b. D'un côté, dit supérieur, selon l'axe médian 2, la platine présente une forme de U qui présente une zone de réception d'un câble C de commande entre les deux bras du U.

Le support 100 est fixé sur le drone 10 au moyen de deux tiges 104d, 104 g

L'interface 100 comporte en outre un support 108 pour recevoir la plaque 70 de la balise 50. Dans le mode de réalisation représenté, le support est placé selon l'axe médian Z. Le support 108 est fixé sur une face dite arrière de la platine 102, et d'un côté, dit inférieur de ladite platine 102 selon l'axe médian.

Plus précisément, le support 108 est formé de trois plaques 108h, 108g, 108 d fixées sur la platine 102 et s'étendant perpendiculairement à ladite platine. La plaque 108g et la plaque 108d sont parallèles entre elles et perpendiculaires à la plaque 108h.

L'interface 100 comporte en outre deux platines 110g et 110d s'étendant vers l'arrière, selon un plan perpendiculaire à la face arrière 102b, dit horizontal, de part et d'autre du support 108, et plus précisément des plaques 108h et 108g.

Les deux platines 110g et 110d forment des supports de fixation pour des éléments de guidage 112g et 112d de tubes 114g et 114d. Alternativement, les éléments de guidage 112g et 112d pourraient être directement fixés sur la platine 113.

La liaison mécanique entre les deux tiges mobiles et les éléments de guidage est une liaison cylindre plan bilatérale, dont l'axe est l'axe de la tige, la normale étant perpendiculaire au plan du châssis. Sont ainsi bloqués tous les degrés de liberté sauf la translation et rotation selon un plan parallèle au plan du châssis et la rotation de la tige autour de son propre axe.

### Moyens d'actionnement de la pince 60

L'interface de pose 100 comporte un sous-ensemble de support et d'actionnement de la pince permettant de déplacer la pince 60 en position de fermeture, sur commande mécanique.

### Selon le mode de réalisation préférentiel illustré sur

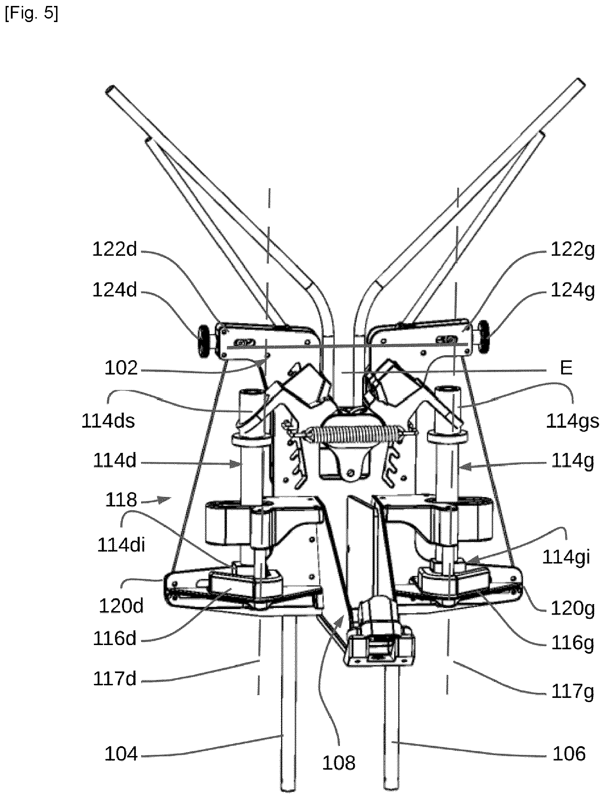

[Fig. 5], les moyens de commande à la fermeture des mâchoires 62 et 64 comprennent deux tiges mobiles 114g et 114 d dont une extrémité proximale 114gs, 114ds s'étend à travers les crochets 62c, 64c.

Chacune des tiges présente un épaulement 114ge, 114de pour recevoir la pince en appui dans une position ouverte. L'épaulement permet de régler la distance entre la pince et le câble de commande. Si le câble de commande est trop bas, le câble aérien touche le centre de la pince avant de l'avoir fermée, si c'est trop haut, la pince se referme sans emprisonner le câble aérien.

La pince est maintenue dans une position ouverte, par arc-boutement avec chacune des tiges au niveau d'un point d'appui de levier.

Chaque autre extrémité distale 114gi, 114di du tube 114g et 114d est en appui contre une pièce de commande 116g, 116d.

Plus précisément, dans le mode de réalisation représenté, les pièces de commandes 116g, 116d sont montées à rotation, de part et d'autre de l'axe médian Z, autour d'axes parallèles à l'axe médian Z, référencés 117g, 117d.

Les moyens d'actionnement comportent en outre un câble de commande 118 dont les deux extrémités sont fixées sur les pièces de commande 116g, 116d. Le câble de commande 118 passe par deux réas 120g, 120d, dont les axes sont disposés perpendiculairement à la platine, de part et d'autre de son axe médian Z, au niveau de la partie inférieure de la platine.

Le câble de commande 118 passe par deux réas 122g, 122d, dont les axes sont disposés perpendiculairement à la platine sur les montants de la partie supérieure, de part et d'autre de son axe médian Z.

Le câble de commande 118 vient séparer la zone de réception E du câble C en une partie supérieure et une partie inférieure.

Les pièces de commande sont montées sur l'interface de pose 100 de sorte que le câble de commande 118 les écartent vers l'extérieur de l'interface 100 lorsque le contact du câble C déplace.

### Principe de fonctionnement

Lors de l'installation d'une balise 50 sur l'interface 100, la balise 50 repose sur les tubes 114g et 114d, par l'intermédiaire de ses crochets 62c, 64c. Les tubes servent ainsi également de support et centreur à la balise 50 dans l'interface.

### Comme mieux visible sur

[Fig. 5], lorsqu'un câble C pénètre dans la zone de réception E, il déplace le câble de commande 108 du côté de la partie intérieure de la zone de réception E. Ce faisant, le câble de commande fait pivoter la pièce de commande 116d autour de l'axe 117 sur laquelle l'extrémité 114gi du tube 114g est en appui. Chacune des pièces de commande applique simultanément un moment de rotation sur les tiges mobiles au niveau de leur extrémité distale, chacune des tiges mobiles agissant comme un levier pour transmettre l'effort reçu sur la pince, au niveau de leur extrémité distale. Plus précisément, le bras de levier est un bras de levier de deuxième classe.

La tension du fil est réglée de sorte que la pince emprisonne le câble C lorsqu'elle se referme.

### Carrés

Selon l'exemple représenté, chacune des tiges s'étend selon un axe principal 114x et présente une extrémité formée d'un carré présentant un axe central 114c, l'axe principal étant parallèle et distinct de l'axe central.

Le centre de la tige est ainsi à 4 distances distinctes d1, d2, d3 d4 des côtés du carré, avec d1+d2 = d3+d4 dans l'exemple représenté.

Le choix de la distance placée entre le centre de la tige et la pièce de commande permet de s'adapter à différentes pinces et de modifier la précontrainte exercée par l'extrémité proximale de la tige sur la pince.

### Sous-ensemble tendeur

Interface de pose comprend un sous-ensemble tendeur agencé pour régler la tension du câble de commande 118.

Le sous-ensemble tendeur comprend des moyens de rapprochement ou d'écartement des deux réas 122 g et 122d.

Dans l'exemple représenté, les axes des deux réas sont déplaçables au moyen de deux boutons de réglage 124g et 124 d.

### Sous-ensemble de guidage

L'interface 100 comprend des moyens 170 adaptés pour assurer un guidage du dispositif sur un câble C, lorsque le drone 10 est en approche de celui-ci.

Plus précisément, les moyens de guidage 170 comportent un guide formé d'une fourche à deux branches, 171g, 171d formant un V ouvert vers le haut.

Chacune des branches est formée d'une surface tubulaire garantissant que l'interface 100 ne présente pas d'épaulement formant butée au câble.

Les branches présentent des parties distales du côté de l'ouverture du V et des parties proximales du côté du sommet du V.

Les branches 171g, 171d forme une première partie de guidage 172 dans laquelle le guidage formé est un guidage quasi rectiligne. La première partie 172 est formée de parties proximales rectilignes 172g et 172d des branches. Cette première partie de guidage est disposée au niveau de la partie intérieure de la zone de réception du câble.

Les branches 171g, 171d forment une deuxième partie de guidage 174 dans laquelle le guidage formé est un guidage en V, selon un angle variant progressivement entre 0 et 90° d'ouverture. La deuxième partie 174 est formée de parties intermédiaires arrondies 174g et 174d des branches. Cette deuxième partie de guidage est au niveau de la partie intérieure de la zone de réception, du côté extérieur du U par rapport à la partie 172.

Les branches 171g, 171d forme une troisième partie de guidage 176 aussi appelée prolongateurs. La troisième partie 176 est formée de parties distales rectilignes 176g et 176d des branches. Les prolongateurs 176 permettent d'allonger la longueur du guidage c'est-à-dire le champ d'action des moyens de guidage. Le dispositif conforme à l'invention est en effet ainsi guidé pour se centrer sur le câble C dès lors que l'un au moins des prolongateurs 176 prend appui sur le câble C par sa surface interne dirigée vers l'intérieur du dièdre de guidage en V.

Chacune des branches 171g, 171d, est fixée, du côté de sa partie proximale, à un support de tige 178g, 178d.

Les moyens de guidage 170 comportent en outre deux tiges de renfort 180g, 180d, de préférence en fibre de verre, présentant chacune une extrémité proximale fixée sur le support tige correspondant 178g, 178d, et une extrémité distale au niveau de l'extrémité distale de la branche correspondante 171g, 171d.

Chacun des supports de tige 178g, 178 d est fixé sur la platine arrière 102 sur une face 102f, dite avant, opposée à la face arrière 102b de la platine 102. Selon l'exemple représenté, le support de tige 178d est fixé en deux-points 182d1 et 182d2 sur la platine 102.

Selon une possibilité illustrée, la platine peut comporter différentes positions de fixations pour chacun des supports de tige. Selon l'exemple illustré, le support de tige 178g peut être fixé en quatre positions, prévues sur un crantage 102cd de la platine 102.

Il est ainsi possible de modifier l'écartement entre les tiges 174g et 174d, ce qui permet d'adapter ledit écartement au diamètre du câble aérien.

### Dispositif de réglage angulaire

Comme le comprend aisément un homme de l'art, le guidage est le plus efficace lorsqu'à l'approche du câble C par le drone 10, le plan de guidage est perpendiculaire au câble.

Certains câbles C peuvent ne pas être horizontaux, et par exemple être inclinés de 45° par rapport à l'horizontale (et la verticale). Une solution est alors de tenter une approche dans laquelle le plan des hélices du drone est parallèle au câble C pour conserver un plan de guidage perpendiculaire au câble lors de l'approche. Néanmoins, une telle approche n'est pas aisée.

Pour résoudre ce problème, la demanderesse a eu l'idée de doter l'interface 100 d'un dispositif de réglage angulaire 200.

Le dispositif de réglage angulaire 200 permet de régler l'angle formé entre le plan de la platine arrière 202 et le plan formé par les deux branches 171g, 171d.

### Caméras de vol

Comme mieux visible sur Figure 6, l'interface de pose peut être dotée d'une caméra embarquée 302, disposée du côté de la face avant de la platine avant 130. L'axe optique de la caméra est dirigé vers l'avant, perpendiculairement à la face avant de la platine avant 130.

L'interface de pose peut être dotée d'une caméra embarquée 304, par exemple disposée du côté arrière de la face arrière de la platine arrière 102. L'axe optique de la caméra est dirigé vers l'avant. Plus précisément, l'axe optique de la caméra intercepte à 45 degrés le plan de guidage formé par deux branches 171g et 171d.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Interface de pose (100) d'une pince (60) sur un câble arien (C) au moyen d'un drone (10), l'interface de pose comprenant un châssis (102) présentant une zone de réception (E) du câble aérien, sur lequel est fixé :
• un sous-ensemble de liaison mécanique avec le drone, et
• un sous-ensemble de support et d'actionnement de la pince depuis une position ouverte vers une configuration fermée, ledit sous-ensemble de support et d'actionnement comportant :
i. deux tiges mobiles (114d, 114g) déplaçable entre une position initiale dans laquelle la pince est maintenue dans une position ouverte, par arc-boutement avec chacune des tiges au niveau d'un point d'appui de levier, disposé du côté d'une extrémité dite proximale (114ds, 114gs), et une position finale dans laquelle la pince est dans une position fermée,
ii. deux éléments de guidage (112d, 112g) fixés sur le châssis 102, pour guider respectivement les deux tiges mobiles selon une liaison cylindre plan bilatérale,
iii. deux pièces de commande (116d, 116g), chacune des pièces de commande étant montée à rotation sur le châssis et étant agencée pour recevoir respectivement une extrémité distale (114di, 114 ds) de la tige mobile (114d, 114g),
iv. un câble de commande (118) reliant les deux pièces de commande et coupant l'espace de réception (E) du câble aérien, définissant ainsi une partie extérieure et une partie intérieure tournée vers les pièces de commande,
ledit sous-ensemble de support et d'actionnement étant agencé de sorte que lorsque le câble de commande est déplacé vers la partie intérieure de l'espace de réception, la force de déplacement est transmise par le câble aux pièces de commande (116d, 116g) qui sont entraînées en rotation et appliquent simultanément un moment de rotation sur les tiges mobiles au niveau de leur extrémité distale, chacune des tiges mobiles agissant comme un levier pour transmettre l'effort reçu sur la pince, au niveau de leur extrémité distale.

2. Interface de pose selon la revendication précédente, dans lequel le bras de levier est un bras de levier de deuxième classe.

3. Interface de pose selon l'une des deux revendications précédentes, dans lequel le câble de commande (118) est précontraint.

4. Interface de pose selon l'une quelconque des revendications précédentes, comprenant un sous-ensemble tendeur agencé pour régler la tension du câble de commande (118).

5. Interface de pose selon l'une quelconque des revendications précédentes, dans laquelle chacune des tiges présente un épaulement (114de, 114ge) pour recevoir la pince en appui dans une position ouverte.

6. Interface de pose selon l'une des deux revendications précédentes, dans laquelle chacune des tiges s'étend selon un axe principal et présente une extrémité formée d'un carré présentant un axe central, l'axe principal étant parallèle et distinct de l'axe central.

7. Interface de pose selon l'une quelconque des revendications précédentes, comprenant en outre un sous-ensemble de guidage du câble aérien (C) fixé sur le châssis, comprenant deux tiges de guidage (172g, 172d) disposées de part et d'autre de l'espace (E) et adaptés pour assurer le centrage de la pince (60).

8. Interface de pose selon la revendication précédente, dans lequel que les moyens de guidage (170) comprennent au moins un guide en V.

9. Interface de pose selon l'une des deux revendications précédentes, dans lequel la distance entre les tiges de guidage (172g, 172d) est réglable.

10. Interface de pose selon l'une quelconque des revendications précédentes, dans lequel le sous-ensemble de liaison mécanique avec le drone (10) est réglable angulairement.

11. Interface de pose selon l'une quelconque des revendications précédentes, comportant un sous-ensemble panier prévu pour recevoir une plaque (70) fixée à la pince (60).

12. Système comportant :
• un drone (10) adapté pour transporter au moins une balise (50), et qui porte
• une interface de pose (100) d'une balise sur un câble aérien selon l'une quelconque des revendications précédentes.
